# EUROPEAN PATENT APPLICATION

(11) **EP 4 510 104 A1**
(43) Date of publication of application: **19.02.2025**
(21) Application number: 23191739.4
(22) Date of filing: 16.08.2023
(51) Int. Cl.: G08G 1/01, G08G 1/0967, G08G 1/16, B60W 30/09, B60W 60/00, G01C 21/36

(54) **METHODS RELATING TO OBJECTS ON A DOWNHILL ROAD SECTION OF A ROAD**

(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(57) **Abstract**

The disclosure relates to a method (100) for detecting objects (40) on a downhill road section (34) of a road (30), the method (100) being configured to be carried out at by an ego vehicle (10), and the method (100) comprising:
- identifying the downhill road section (34) of the road (30) ahead of the ego vehicle (10),
- requesting object information (OI) about the downhill road section (34) recorded from at least one device (20) on or near the downhill road section (34), the object information (OI) containing location information of at least one object (40) on the road (30), and
- receiving the requested object information (OI) for detecting objects (40) on the downhill road section (34).

## Description

### TECHNICAL FIELD

The present disclosure relates to a method for detecting objects on a downhill road section of a road, a method for transmitting object information about at least one object on a downhill road section of a road, a method for forwarding object information about at least one object on a downhill road section of a road, a computer program product, a data processing apparatus and a vehicle.

### BACKGROUND ART

When a vehicle approaches a downhill road section, i.e., a section of a road being downhill, the driver of the vehicle cannot detect any objects in the downhill road section because the visibility of the road is significantly reduced due to the sloped road section leading up to the downhill road section. In other words, the driver of the vehicle cannot see behind the hill that he is driving towards and, only upon arriving at the hilltop, can look down the downhill road section and observe the downhill road section for potential dangers in form of objects, such as stopped or slow cars, or pedestrians or animals being on the road, for example.

The downhill road section may accordingly be a blind spot. Any object on the downhill road section that is not expected by the driver may be dangerous because the driver may not become aware of it in time to prevent a dangerous traffic situation, e.g., a risk reducing maneuver, such as a full stop, or a collision with the object.

Even if the vehicle comprises detection means for detecting objects on the road, e.g., radar, cameras or sensors, the detection area of such detection means is obstructed by the road in the sloped road section. Accordingly, even in autonomously driving vehicles without drivers, dangerous situation as the one described above may occur.

### SUMMARY

It is an object of the present invention to reduce a risk of occurrence of dangerous traffic situations on downhill road sections travelled by vehicles.

The problem is at least partially solved or alleviated by the subject matter of the independent claims of the present disclosure, wherein further examples are incorporated in the dependent claims.

According to a first aspect, there is provided a method for detecting objects on a downhill road section of a road, the method being configured to be carried out at by an ego vehicle, and the method comprising:
- identifying the downhill road section of the road ahead of the ego vehicle,
- requesting object information about the downhill road section recorded from at least one device on or near the downhill road section, the object information containing location information of at least one object on the road, in particular the downhill road section, and
- receiving the requested object information for detecting objects on the downhill road section.

Accordingly, the method of the first aspect provides for a detection of objects on a downhill road section even with obstructed view in the sloped road section leading up to the downhill road section. This detection is not realized by classic detection means of the ego vehicle, which may comprise detection means such as one or more radar, camera and/or sensor, for example, but by using object information that is requested from at least one device being on or near the downhill road section. Because the device is on or near the downhill road section, the device may record and provide the object information. For example, the device may be another vehicle, a smartphone, or similar. The device may have detection means such as one or more radar, camera and/or sensor for recording the object information, for example. Further, the device may have localization means, such as a GPS sensor, for example, for determining the location of the at least one object on the road as location information, which it may directly or indirectly, e.g., via a cloud server, transmit as the object information to the ego vehicle.

The object information contains location information of the at least one object on the road, which may be or may not be on the downhill road section. For example, it may also be of interest if the object is not yet on the downhill road section but it is moving towards the downhill road section, e.g., a passenger that may cross the downhill road section, or a vehicle that quickly approaches the downhill road section but is not yet on the downhill road section but merely on the road. Inter alia for this purpose, further information, for example, about a moving direction, moving speed and/or type of object may be contained in the object information, as will be described below in more detail.

The step of requesting the object information is performed for the downhill road section that is identified by the ego vehicle. The identifying of the downhill road section may be performed based on radar data, camera data, sensor data and/or geolocation data of the ego vehicle, for example. This means that the ego vehicle may detect, with one or more radars, cameras and/or sensors, a road slope section ahead and thereby identify that a downhill road section is to follow. Additionally, or alternatively, the ego vehicle may identify the downhill road section via the geolocation data, which may be stored on the ego vehicle. The identification of the downhill road section may be a trigger for the requesting of the object information.

Then, the requested object information is received for detecting objects on the downhill road section. Accordingly, based on the received requested object information, the ego vehicle may detect objects on the downhill road section. In the simplest way, the detection of the objects may be based merely on extracting the location information of the at least one object in the object information and assuming that an object is located on the downhill road section and, possibly, assuming that the location of the object is according to the location information.

However, the ego vehicle may also perform a more complex detection of the objects on the downhill road section. For example, the ego vehicle may receive the requested object information about the downhill road section from different devices. Also, or alternatively, the requested object information may be received at different times or be provided with a time stamp, i.e., they may be up-to-date or older. In these cases, the detection of the objects may be based on an evaluation of the requested object information from different devices and/or the recency of that object information. For example, the detection may prioritize more recent object information and/or object information determined from vehicles rather than other types of devices, such as smartphones. The evaluation may be statistically based and require a certain threshold of likelihood that an object is on the downhill road section for detecting the object on the downhill road section. Thereby, it may be ensured that the method is sensitive for objects on the downhill road section based on recent object information but does not detect objects based on outdated object information.

The ego vehicle may be a manually drivable vehicle and/or an autonomously driving vehicle, for example. Specifically, in case the ego vehicle is an autonomously driving vehicle or, in other words, is equipped with autonomous driving capabilities, the method may be carried out during an autonomous driving operation of the ego vehicle. The ego vehicle may be a car such as a passenger car, for example.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

In an example, the method of identifying of the downhill road section may comprise:
- receiving detection information of the road for a predefined road length ahead of the ego vehicle,
- determining whether the road should be detectable for the predefined road length, and
- the downhill road section being identified if the road should be detectable for the predefined road length and the road is not being detected for the entire predefined road length according to the detection information.
The received detection information may be received from one or more detection means of the ego vehicle, e.g., one or more radars, cameras and/or sensors. Whether the road is detectable for the predefined road length serves as criterion for determining whether the ego vehicle is approaching a downhill road section or not. This has been found as a particularly reliable and simple method of identifying the downhill road section.

In an example, the determining whether the road should be detectable for the predefined road length or not may be based on geolocation data, such as GPS and/or map data, of the road. Accordingly, by means of geolocation data, for a current geolocation of the vehicle, it may be determined whether the road should be detected by the detection means of the ego vehicle for the predefined road length. If it should be detected and the road is not being detected for the entire predefined road length, it may be judged that a downhill road section is ahead of the travel path of the ego vehicle.

In an example, the identifying of the downhill road section may comprise identifying a start location of the downhill road section. The object information may be requested for the start location and a predefined distance from the start location, for example. This increases the accuracy of the object information for the purpose of detecting only the objects in a dangerous part of the downhill road section that the ego vehicle cannot see.

In an example, the object information may be requested from a cloud server receiving the recorded object information from the at least one device. Thereby, a secure and fast way of acquiring the requested object information may be provided. That is, the cloud server may at any given time collect the object information, e.g., in a vehicle2vehicle or vehicle2X communication, and merely forward it to the ego vehicle upon request. Also, the cloud server may filter the object information it receives before it forwards or sends the object information to the ego vehicle. For example, the cloud server may discard erroneous object information or accept object information only from previously validated devices.

In an example, the object information may further contain object classification of the at least one object into at least one of the following: another vehicle, a pedestrian, an animal, a cyclist and a road obstacle. The object classification may comprise a deeper level of classification, such as, for pedestrian: elderly person, children, etc., for vehicles: cars, bicycles, motorcycles, etc., for animals: large or small animals, etc., for example. The object classification may be used for estimating a danger based on the detected object on the downhill road section, e.g., a danger of collision or the ego vehicle being required to perform a risk reducing maneuver. Also, a drive action for the ego vehicle may be determined in accordance with the object classification.

In an example, the object information may further contain a predicted movement trajectory of the at least one object. The predicted movement trajectory may be based on a current movement direction of the at least one object, the recognition of a situation and/or environment of the road object and/or the type of object or object classification, for example. For example, if a pedestrian crossing is located in the downhill road section and a pedestrian as object is moving on a sidewalk of the road towards that pedestrian crossing, the movement trajectory of that object may be predicted along the pedestrian crossing. The predicted movement trajectory may be used for estimating a danger based on the detected object on the downhill road section. Also, a drive action for the ego vehicle may be determined in accordance with the predicted movement trajectory.

In an example, the location information may comprise geolocation data and/or an identification of a road lane of the road. Accordingly, the location information may pinpoint the location of the object by means of the geolocation data. Alternatively, or additionally, the location information may indicate the road lane of the road. Thereby, it may be detected whether the object is on the road lane travelled by the ego vehicle or not. Based on the aforementioned examples of object information, it may also be assessed how likely it may be that the object crosses the road lane travelled by the ego vehicle, for example.

In an example, the object information may be recorded from a device in form of another vehicle driving towards the ego vehicle on an opposite road lane and/or another vehicle driving ahead of the ego vehicle.

In an example, the method may further comprise
- calculating a vehicle-to-object distance of the at least one object from the ego vehicle, and/or
- determining at least one drive action for the ego vehicle based on the received object information.
In particular, the vehicle-to-object distance may be used to estimate a danger based on the detect object on the downhill road section. The at least one drive action may be to decelerate the ego vehicle or switch lanes, for example. The drive action may be determined based on the vehicle-to-object distance and/or the object information, in particular the object classification, predicted movement trajectory, geolocation data and/or identification of a road lane of the object information, for example. Accordingly, a deceleration may be determined for the at least one drive action to be higher in case children playing on the road lane travelled by the ego vehicle are detected as objects on the downhill road section and the deceleration may be determined for the at least one drive action to be smaller in case another vehicle as object is driving on the road lane travelled by the ego vehicle in the same direction as the ego vehicle.

According to a second aspect, there is provided a method for transmitting object information about at least one object on a downhill road section of a road, the method being in particular configured to be carried out at least partially by a device and the method comprising:
- receiving a request for object information about the downhill section recorded from the at least one device on or near the downhill road section, the at least one device being configured to determine objects on or near the downhill road section, the object information containing location information of at least one object on the road, and
- transmitting the requested object information.

Accordingly, the method of the second aspect provides for how the object information may be recorded and transmitted, in particular directly or indirectly to the ego vehicle of the first method. The method may optionally comprise identifying of the downhill road section, which may be performed as herein described with reference to the ego vehicle, for example. The request for object information may be received directly from the ego vehicle or via the above-mentioned cloud server, for example. Also, the requested object information may be transmitted directly to the ego vehicle or to the cloud server.

Not all of the steps of the method of the second aspect need to be carried out by the device, which may be another vehicle, in particular a car, such as a passenger car, for example. For example, the step of receiving the request for object information may be carried out by the cloud server and the device may continuously transmit the requested object information to the cloud server.

According to a third aspect, there is provided a method for forwarding object information about at least one object on a downhill road section of a road, the method being in particular configured to be carried out by a cloud server and the method comprising:
- receiving, from an ego vehicle, a request for object information about the downhill section recorded from at least one device on or near the downhill road section, the at least one device being configured to determine objects on or near the downhill road section, the object information containing location information of at least one object on the road,
- forwarding the request for object information to the at least one device,
- receiving the requested object information from the at least one device, and
- forwarding the received object information to the ego vehicle.

Accordingly, the method of the third aspect provides for how the object information may be relayed between the device and the ego vehicle. The method of the first aspect may comprise further steps, such as filtering the received object information as previously described above, for example.

According to a fourth aspect, there is provided a computer program product comprising instructions which, when the program is executed by a computer, cause the computer to carry out the method according to the first, second and/or third aspect of this disclosure.

The computer program product may be a computer program as such or a product, e.g., a computer readable medium, having stored the computer program thereon, for example.

According to a fifth aspect, there is provided a data processing apparatus comprising means for carrying out the method according to any one of the first, second and/or third aspect of this disclosure.

The means may comprise storage means, on which the computer program product may be stored, and/or processor means or a computer for executing the instructions thereof, for example.

According to a sixth aspect, there is provided a vehicle, configured to carry out the method of the first aspect and/or the second aspect of this disclosure.

The vehicle may comprise the computer program product of the fourth aspect of this disclosure and/or the data processing apparatus of the fifth aspect of this disclosure.

It should be noted that the above examples may be combined with each other irrespective of the aspect involved. Accordingly, the methods may be combined with structural features and, likewise, the apparatus and the vehicle may be combined with features described above with regard to the methods.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a method for detecting objects on a downhill road section of a road;
- Figure 2: shows a schematic illustration of a method for transmitting object information about at least one object on a downhill road section of a road;
- Figure 3: shows a schematic illustration of a method for forwarding object information about at least one object on a downhill road section;
- Figure 4: shows a schematic illustration of a situation, in which the method of Fig. 1 may be applied;
- Figure 5: shows a schematic illustration of the situation of Fig. 5 at a later time;
- Figure 6: shows a schematic illustration of a vehicle;
- Figure 7: shows a schematic illustration of a situation, in which the method of Fig. 1 is being used;
- Figure 8: shows the situation of Fig. 7, in which the methods of Figs. 1 to 3 are being used;
- Figure 9: shows another situation, in which any of the methods of Figs. 1 to 3 may be used;
- Figure 10: shows yet another situation, in which any of the methods of Figs. 1 to 3 may be used;
- Figure 11: shows a further situation, in which any of the methods of Figs. 1 to 3 may be used; and
- Figure 12: shows a further situation, in which any of the methods of Figs. 1 to 3 may be used.

### DETAILED DESCRIPTION

The Figures are merely schematic representations and serve only to illustrate examples of the disclosure. Identical or equivalent elements are in principle provided with the same reference signs.

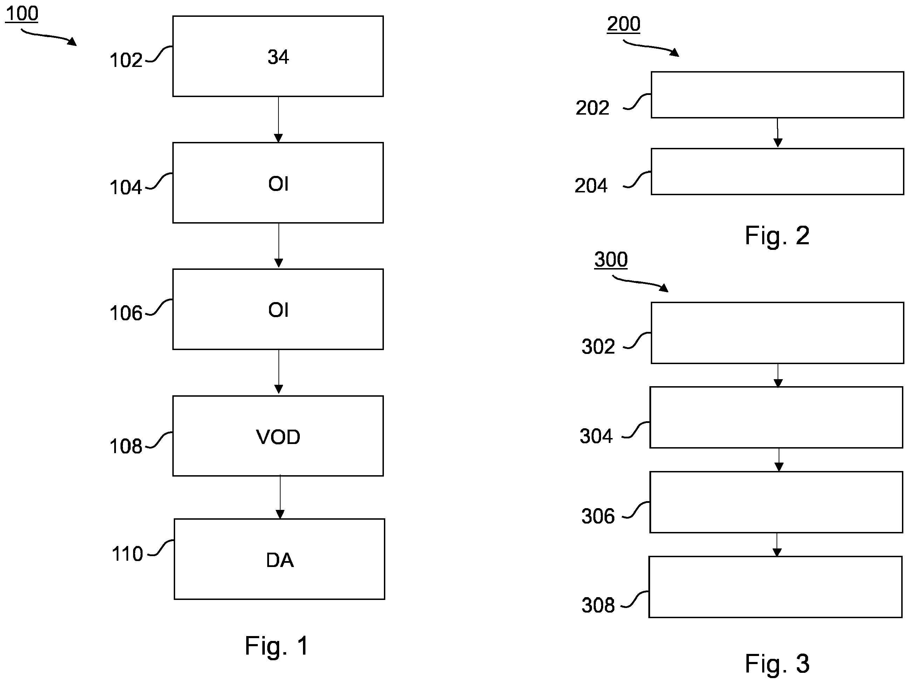

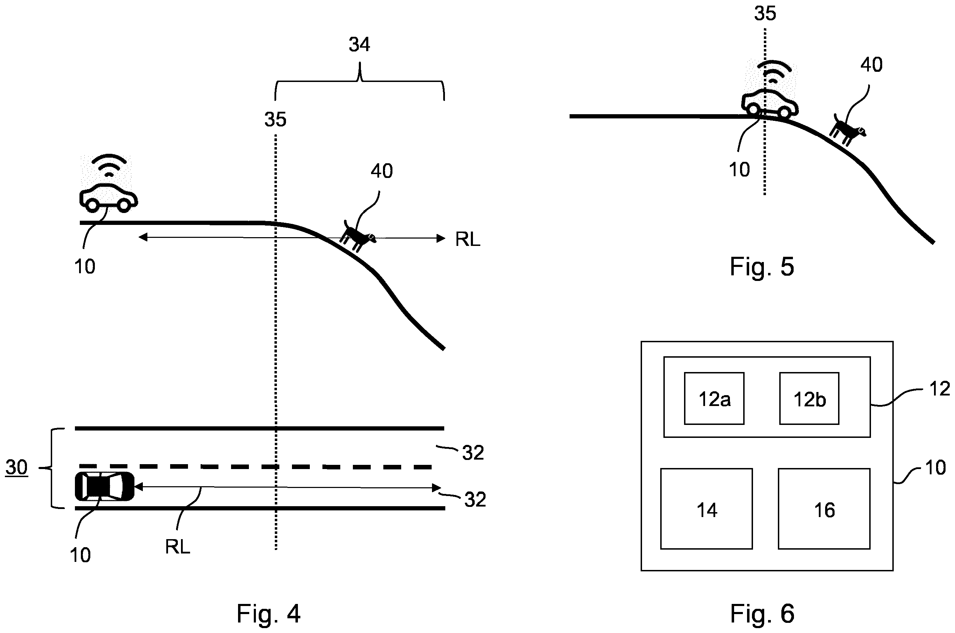

Figure 1 shows a method 100 for detecting objects 40 on a downhill road section 34 of a road 30 ((see Figs. 4 and 5, for example). The method 100 may be carried out by a vehicle (see Figs. 4, 5, 6, for example), which is herein referred to as an ego vehicle 10.

In step 102 of method 100, the downhill road section 34 is being detected. This may be done by, first, receiving detection information of the road 30 for a predefined road length RL, as may be seen in Fig. 4, for example. The detection information may be based on a detection means 14 of the ego vehicle 10, which may include camera, radar and/or sensor means, for example. The road length RL may be predefined in the range of 100 to 500 m, in particular 150 to 400 m or 200 to 300 m, for example.

Then, it may be determined whether the road 30 should be detectable for the predefined road length RL based on geolocation data of the road 30, which may comprise GPS data and/or map data. If the road 30 should be detectable for the predefined road length RL based on the geolocation data and it is indeed detected by the detection means 14, then a downhill road section 34 is not being identified. However, in case the road 30 should be detectable for the predefined road length RL based on the geolocation data and it is not detected by the detection means 14, the downhill road section 34 ahead of the ego vehicle 10 is identified. In this case, the detection means 14 cannot see behind the downhill road section 34 but the road 30 should be detectable based on the geolocation data.

Step 102 of method 100 may be understood best from the situation of Fig. 4. The top section of Fig. 4 shows the road 30 in a side perspective view, whereas the bottom section of Fig. 4 shows the road 30 in a top view, i.e., in the typical form of information of the geolocation data. Accordingly, based on the geolocation data alone, the ego vehicle 10 cannot identify the downhill road section 34. However, as explained above, together with the detection means 14 not detecting the road 30 for the predefined road length RL as illustrated in Fig. 4, the ego vehicle 10 may identify the downhill road section 34. In the example of Fig. 4, the geolocation data, as illustrated in the bottom section of Fig. 4, indicates that the road 30, in particular road lane 32, should be detectable for the predefined road length RL. However, in the real situation of the ego vehicle 10 in the top section of Fig. 4, the detection means 14 cannot detect the road 30 for the full predefined road length RL but only until a start location 35 of the downhill road section 34, which may be identified by virtue of the distance or length that the detection means 14 are able to detect the road 30.

Figure 4 now further depicts that an object 40, in this exemplary case depicted as a dog or other animal, is located on the downhill road section 34. Once the ego vehicle 10 may gain sight of the object 40, as illustrated in Fig. 5 and, e.g., at or behind the start location 35, the ego vehicle 10 may be forced to perform a danger reducing maneuver or it may be too late for such and a collision with the object 40 may occur. The method 100 may help in prevent such situations.

In a step 104 following step 102, the ego vehicle 10 requests object information OI about the downhill road section 30 ahead of the ego vehicle 10. This object information OI may be recorded from at least one device 20 on or near the downhill road section 30. The device may be another vehicle, for example. The device 20 needs not to be located on the downhill road section 34 itself when requesting the object information OI. For example, the device 20 may just or a short moment ago left the downhill road section 34 but still have recorded object information OI about the downhill road section 34. The objection information OI contains at least location information of at least one object 40 on the road 30, in particular the downhill road section 34. For example, the object information in Figs. 4 and 5 may contain the location of the dog as object 40 on the downhill road section 34.

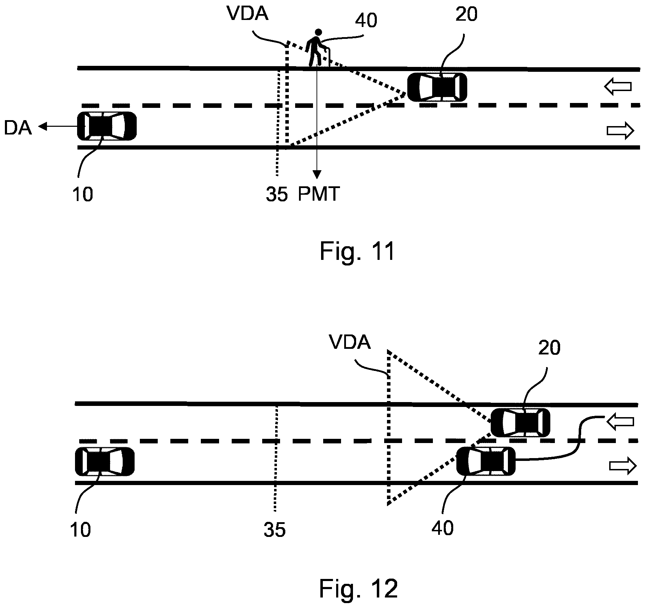

The object information OI may further comprise an object classification of the at least one object 40 into different types of objects 40, such as animals and pedestrians, for example. Also, a predicted movement trajectory PMT (see Fig. 11) may be contained in the object information OI.

In step 106 following step 104 of method 100, the ego vehicle 10 may receive the requested object information OI for detection of one or more objects 40 on the downhill road section 34. A further, optional step of detection may be done based on the received object information OI. E.g., the received object information OI may be processed, e.g., from different devices 20, received at different times, etc., and it may be checked for coherence for detecting one or more objects 40 on the downhill road section 34.

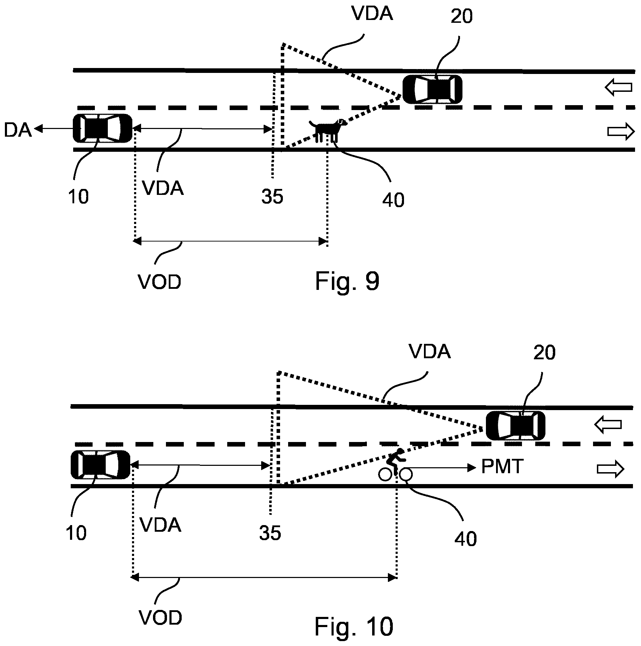

In another step 108 following the step 106 of method 100, a vehicle-to-object distance VOD of the object 40 from the ego vehicle 10 may be calculated and, based on the vehicle-to-object-distance VOD, in another step 110, at least one drive action DA for the ego vehicle 10 may be determined based on the received object information and the vehicle-to-object distance VOD (see Figs. 9 and 10, for example).

Figure 2 illustrates a method 200 for transmitting object information OI about the at least one object 40 on the downhill road section 34 of road 30. The object information OI transmitted by method 100 may be received by the ego vehicle 100 in step 106 of method 100. The method 200 may be configured to be carried out at least partially by the device 20.

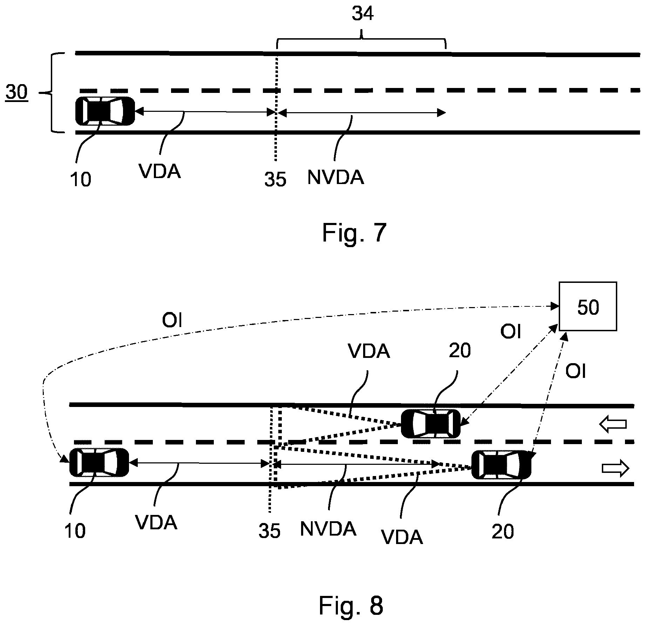

In a step 202 of method 200, the request for object information OI about the downhill section 34 recorded from the at least one device 20 on or near the downhill road section 34, which was sent by the ego vehicle 10 by method 100, may be received. Then, in step 204 of method 200, the requested object information OI may be transmitted for receival by the ego vehicle 100 in step 106 of method 100. The device may comprise detection means, such as or similar to the ones mentioned with respect to the ego vehicle 10, recording the object information OI by means of such. The transmitting of the requested object information OI may be done by the device 20 itself or a cloud server 50 (see Fig. 8), for example.

Figure 3 illustrates a method 300 for forwarding object information OI about the at least one object 40 on the downhill road section 34. The method 300 may be configured to be carried out by the cloud server 50.

In a step 302 of the method 300, the request for object information OI about the downhill section 34 recorded from the at least one device 20 on or near the downhill road section 34, from the ego vehicle 10, is being received. Then, in a step 304 of method 100, the request for object information OI is forwarded to the at least one device 20. Consequently, in a step 306 of method 100, the requested object information OI from the at least one device 20 is received by the cloud server 50. And finally, in a step 308 of method 100, the cloud server 50 forwards the received object information OI to the ego vehicle 10.

Figure 6 illustrates an ego vehicle 10 having a data processing apparatus 12, comprising a computer program product in the form of a storage medium 12a and a processor 12b for executing the computer program on the storage medium 12a, thereby carrying out the method 100 of Fig. 1. The ego vehicle 10 further comprises the already mentioned detection means 14 and wireless communication means 16, such as, but not limited to, cellular communication means or Wi-Fi communication means, for example.

Figure 7 depicts a situation, in which the method 100 of Fig. 1 may be used. Here, the ego vehicle 10 is travelling the road 30 and has a visible detection area VDA, by means of its detection means 14, and a non-visible detection area NVDA, which generally would be within the range of the detection means 14, but is non-visible to the ego vehicle 10 due to the downhill road section 34 being located behind the start location 35 thereof.

Figure 8 depicts how in such a situation, devices 20, such as other vehicles, may assist the ego vehicle 10 in detecting objects 40 on the downhill road section 34 despite the ego vehicle 10 not being able to detect any object 40 in the non-visible detection area NVDA. The respective other vehicles on two different road lanes 32 are having respective visible detection areas VDA, illustrated herein schematically as detection cones, in which they may detect other objects 40. The devices 20 transmit the object information OI based on their detection within their visible detection areas VDA to the cloud server 50, which may optionally process the object information OI, and forward it to the ego vehicle 10. The ego vehicle 10 may accordingly detect any objects 40 on the downhill road section 34 prior to them being visible to the ego vehicle 10. Also, the ego vehicle 10 may specifically request the object information OI from the cloud server 50, which may forward the request to one or more of the devices 20 on the downhill road section 34.

Figure 9 illustrates the situation of Figs. 4 and 5 but with a device 20 in the form of a vehicle having the dog as object 40 in its visible detection area VDA. Accordingly, the object information OI, in particular location information, of the object 40 may be transmitted to the ego vehicle 10. The ego vehicle 10 may, based on the object information OI, calculate the current vehicle-to-object distance VOD to the object 40 and determine an appropriate drive action DA to prevent a dangerous situation. For example, the ego vehicle 10 may reduce its speed before arriving at the start location 35 such that it may safely pass by the object 40.

Figure 10 illustrates another situation, in which the object 40 is a bicyclist. The object information OI includes an object classification of the object 40 as bicyclist and a predicted movement trajectory PMT, according to which the bicyclist is cycling in the same direction as the ego vehicle 10 drives. The vehicle-to-object distance VOD is once again calculated and depending on the VOD, there may be no drive action DA necessary based on the object 40 being a bicyclist cycling downhill.

Figure 11 illustrates a similar situation including predicted movement trajectory PMT in the object information OI of the device 20. However, the object 40 here is a pedestrian and not on the road 30 itself. But the object information OI including the predicted movement trajectory PMT indicates that the object 40 may cross the road 30 behind the start location 35 and thus a drive action DA may be necessary to avoid an incident with object 40.

Figure 12 illustrates another situation, in which the object 40 is another vehicle on the road lane 32 of the ego vehicle 10 overtaking the device 20.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

10 ego vehicle
12 data processing apparatus
12a storage medium
12b processor
14 detection means
16 wireless communication means
20 device
30 road
32 road lane
34 downhill road section
35 start location
40 object
50 cloud server
100, 200, 300 methods
102, 104, 106 108, 110, 202, 204, 302, 304, 306, 308 steps
DA drive action
PMT predicted movement trajectory
RL road length
OI object information
VDA visible detection area
NVDA non-visible detection area
VOD vehicle-to-object distance

## Claims

1. A method (100) for detecting objects (40) on a downhill road section (34) of a road (30), the method (100) being configured to be carried out at by an ego vehicle (10), and the method (100) comprising:
- identifying the downhill road section (34) of the road (30) ahead of the ego vehicle (10),
- requesting object information (OI) about the downhill road section (34) recorded from at least one device (20) on or near the downhill road section (34), the object information (OI) containing location information of at least one object (40) on the road (30), and
- receiving the requested object information (OI) for detecting objects (40) on the downhill road section (34).

2. The method (100) according to claim 1, the identifying of the downhill road section (34) comprising:
- receiving detection information of the road (30) for a predefined road length (RL) ahead of the ego vehicle (10),
- determining whether the road (30) should be detectable for the predefined road length (RL), and
- the downhill road section (34) being identified if the road (30) should be detectable for the predefined road length (RL) and the road (30) is not being detected for the entire predefined road length (RL) according to the detection information.

3. The method (100) according to claim 2, the determining whether the road (30) should be detectable for the predefined road length (RL) or not being based on geolocation data of the road (30).

4. The method (100) according to any one of the previous claims, the identifying of the downhill road section (34) comprising identifying a start location (35) of the downhill road section (34).

5. The method (100) according to any one of the previous claims, the object information (OI) being requested from a cloud server (50) receiving the recorded object information (OI) from the at least one device (20).

6. The method (100) according to any one of the previous claims, the object information (OI) further containing object classification of the at least one object (40) into at least one of the following: another vehicle, a pedestrian, an animal, a cyclist and a road obstacle.

7. The method (100) according to any of the previous claims, the object information (OI) further containing a predicted movement trajectory (PMT) of the at least one object (40).

8. The method (100) according to any of the previous claims, the location information comprising geolocation data and/or an identification of a road lane (32) of the road (30).

9. The method (100) according to any of the previous claims, the object information (OI) being recorded from a device (20) in form of another vehicle driving towards the ego vehicle (10) on an opposite road lane (32) and/or another vehicle driving ahead of the ego vehicle (10).

10. The method (100) according to any of the previous claims, the method (100) further comprising:
- calculating a vehicle-to-object distance (VOD) of the at least one object (40) from the ego vehicle (10), and/or
- determining at least one drive action (DA) for the ego vehicle (10) based on the received object information.

11. A method (200) for transmitting object information (OI) about at least one object (40) on a downhill road section (34) of a road (30), the method (200) being configured to be carried out at least partially by a device (20) and the method (200) comprising:
- receiving a request for object information (OI) about the downhill section (34) recorded from the at least one device (20) on or near the downhill road section (34), the at least one device (20) being configured to determine objects (40) on or near the downhill road section (34), the object information (OI) containing location information of at least one object (40) on the road (30), and
- transmitting the requested object information.

12. A method (300) for forwarding object information (OI) about at least one object (40) on a downhill road section (34) of a road (30), the method (300) being configured to be carried out by a cloud server (50) and the method (300) comprising:
- receiving, from an ego vehicle (10), a request for object information (OI) about the downhill section (34) recorded from at least one device (20) on or near the downhill road section (34), the at least one device (20) being configured to determine objects (40) on or near the downhill road section (34), the object information (OI) containing location information of at least one object (40) on the road (30),
- forwarding the request for object information (OI) to the at least one device (20),
- receiving the requested object information (OI) from the at least one device (20), and
- forwarding the received object information (OI) to the ego vehicle (10).

13. A computer program product comprising instructions which, when the program is executed by a computer, cause the computer to carry out the method (100, 200, 300) according to any one of the previous claims.

14. A data processing apparatus comprising means for carrying out the method (100, 200, 300) according to any one of the claims 1 to 12.

15. A vehicle (10), configured to carry out the method (100) according to any one of claims 1 to 11.

## Amended claims

### Amended claims in accordance with Rule 137(2) EPC.

1. A method (100) for detecting objects (40) on a downhill road section (34) of a road (30), the method (100) being configured to be carried out at by an ego vehicle (10), and the method (100) comprising:
- identifying the downhill road section (34) of the road (30) ahead of the ego vehicle (10),
- requesting object information (OI) about the downhill road section (34) recorded from at least one device (20) on or near the downhill road section (34), the object information (OI) containing location information of at least one object (40) on the road (30), and
- receiving the requested object information (OI) for detecting objects (40) on the downhill road section (34).

2. The method (100) according to claim 1, the identifying of the downhill road section (34) comprising:
- receiving detection information of the road (30) for a predefined road length (RL) ahead of the ego vehicle (10),
- determining whether the road (30) should be detectable for the predefined road length (RL) based on geolocation data of the road (30), and
- the downhill road section (34) being identified if the road (30) should be detectable for the predefined road length (RL) and the road (30) is not being detected for the entire predefined road length (RL) according to the detection information.

3. The method (100) according to any one of the previous claims, the identifying of the downhill road section (34) comprising identifying a start location (35) of the downhill road section (34).

4. The method (100) according to any one of the previous claims, the object information (OI) being requested from a cloud server (50) receiving the recorded object information (OI) from the at least one device (20).

5. The method (100) according to any one of the previous claims, the object information (OI) further containing object classification of the at least one object (40) into at least one of the following: another vehicle, a pedestrian, an animal, a cyclist and a road obstacle.

6. The method (100) according to any of the previous claims, the object information (OI) further containing a predicted movement trajectory (PMT) of the at least one object (40).

7. The method (100) according to any of the previous claims, the location information comprising geolocation data and/or an identification of a road lane (32) of the road (30).

8. The method (100) according to any of the previous claims, the object information (OI) being recorded from a device (20) in form of another vehicle driving towards the ego vehicle (10) on an opposite road lane (32) and/or another vehicle driving ahead of the ego vehicle (10).

9. The method (100) according to any of the previous claims, the method (100) further comprising:
- calculating a vehicle-to-object distance (VOD) of the at least one object (40) from the ego vehicle (10), and/or
- determining at least one drive action (DA) for the ego vehicle (10) based on the received object information.

10. A method (200) for transmitting object information (OI) about at least one object (40) on a downhill road section (34) of a road (30), the method (200) being configured to be carried out at least partially by a device (20) and the method (200) comprising:
- receiving a request for object information (OI) about the downhill section (34) recorded from the at least one device (20) on or near the downhill road section (34), the at least one device (20) being configured to determine objects (40) on or near the downhill road section (34), the object information (OI) containing location information of at least one object (40) on the road (30), and
- transmitting the requested object information.

11. A method (300) for forwarding object information (OI) about at least one object (40) on a downhill road section (34) of a road (30), the method (300) being configured to be carried out by a cloud server (50) and the method (300) comprising:
- receiving, from an ego vehicle (10), a request for object information (OI) about the downhill section (34) recorded from at least one device (20) on or near the downhill road section (34), the at least one device (20) being configured to determine objects (40) on or near the downhill road section (34), the object information (OI) containing location information of at least one object (40) on the road (30),
- forwarding the request for object information (OI) to the at least one device (20),
- receiving the requested object information (OI) from the at least one device (20), and
- forwarding the received object information (OI) to the ego vehicle (10).

12. A computer program product comprising instructions which, when the program is executed by a computer, cause the computer to carry out the method (100, 200, 300) according to any one of the previous claims.

13. A data processing apparatus comprising means for carrying out the method (100, 200, 300) according to any one of the claims 1 to 11.

14. A vehicle (10) comprising the data processing apparatus of claim 13.
